# EUROPÄISCHE PATENTSCHRIFT

(11) **EP 3 224 108 B1**
(45) Veröffentlichungstag und Bekanntmachung des Hinweises auf die Patenterteilung: **15.07.2020**
(21) Anmeldenummer: 15781624.0
(22) Anmeldetag: 13.10.2015
(51) Int. Cl.: B61F 5/30

(54) **FEDERTOPF FÜR EINE PRIMÄRFEDERUNG EINES SCHIENENFAHRZEUGS**
SPRING CUP FOR A PRIMARY SUSPENSION OF A RAIL VEHICLE
CUVETTE DE RESSORT POUR UNE SUSPENSION PRIMAIRE D'UN VÉHICULE FERROVIAIRE

(30) Priorität: 27.11.2014 AT 508592014
(43) Veröffentlichungstag der Anmeldung: 04.10.2017
(73) Patentinhaber: Siemens Mobility Austria GmbH, 1210 Wien (AT)
(72) Erfinder: SEIFRIED, Radovan, 2000 Maribor (SI); DIEMLING, Anton, A-8502 Lannach (AT)
(74) Vertreter: Deffner, Rolf
(86) Internationale Anmeldenummer: PCT/EP2015/073660
(87) Internationale Veröffentlichungsnummer: WO 2016/083010

(56) Entgegenhaltungen:
- EP-A1- 0 624 505
- EP-A1- 2 783 939
- CH-A- 175 221
- CN-U- 201 856 779
- DE-U1- 9 307 004

## Beschreibung

### Technisches Gebiet

Die Erfindung betrifft einen Federtopf für eine Primärfederung eines Schienenfahrzeugs, wobei der Federtopf eine Längsachse und einen Federboden zur Übertragung auftretender Kräfte an einen Fahrwerksrahmen des Schienenfahrzeuges aufweist, mit einem Federteller zur Aufnahme von zumindest einem Federelement, welcher Federteller gegen den Federboden des Federtopfes abgestützt ist, wobei ein zentraler Abschnitt des Federtellers als ein Kontaktelement mit einer Kontaktfläche für eine Notfedereinrichtung ausgebildet ist.

### Neuer Stand der Technik

Im Bereich der Schienenfahrzeuge dienen Drehgestelle in der Regel als Laufwerke, wobei zumeist zwei Radsätze in einem Drehgestell gelagert sind. Ein Radsatz umfassend je zwei Räder sowie eine diese verbindende Radachse und ist über eine Primärfederung an einen Fahrwerksrahmen des Drehgestells federnd angebunden. Diese Primärfederung kann Federelemente in Form von Schraubenfedern oder Gummifedern aufweisen. Typischer Weise sind am Fahrwerksrahmen Federtöpfe vorgesehen in denen die Primärfedern aufgenommen werden und über die die Krafteinleitung in den Fahrwerksrahmen erfolgt. Solche Federtöpfe weisen dabei einen Federboden auf, über den die Krafteinleitung erfolgt, der meist mit einem Obergurt des Fahrwerksrahmen verbunden ist oder von diesem ausgebildet ist. Um die Federelemente zu führen und vor Verschmutzung zu schützen, ist der Federtopf seitlich durch einen Mantel begrenzt. Nach unten, also in Richtung der Primärfeder ist der Federtopf offen.

Um die in der Regel metallischen Federelemente aufzunehmen, im Federtopf zu zentrieren und den Federboden zu schonen, ist vielfach ein Federteller vorgesehen, welcher vollflächig am Federboden anliegt und eine Aufnahmefläche für die Federelemente aufweist.

Zusätzlich zu den Federelementen ist üblicher Weise im Zentrum der Primärfeder eine Notfedereinrichtung, beispielsweise aus Kunststoff oder Metall, vorgesehen, welche zum Einsatz kommt, sobald der Federweg der Federelemente ausgeschöpft ist. In diesem Fall kontaktiert die Notfedereinrichtung ein im Zentrum des Federtopfes angeordnetes Kontaktelement, welches mittels Aufnahme am Federboden fixiert ist und beispielsweise aus Kunststoff oder Metall besteht. Diese Situation stellt sich entweder bei Versagen der Federelemente oder bei hohem Gewicht der Waggonteile ein.

Ist der Federweg der Federelemente erschöpft, werden die Federelemente durch den Kontakt zwischen Notfedereinrichtung und Kontaktelement kurzgeschlossen, sodass ein Großteil der zu übertragenden Kraft über das Kontaktelement in das Zentrum des Federbodens und damit auch in das Zentrum eines den Fahrwerksrahmen ausbildenden Längsträgers eingeleitet wird.

Durch die nach unten offene Ausführung des Federtopfes kommt es dadurch zu einer hohen lokalen Biegebelastung im Zentrum des Federbodens, womit die Gefahr plastischer Verformungen in diesem Bereich steigt. Aufgrund der lokalen geringen Steifigkeit ist zur Überwindung dieser Nachteile nur bekannt, den Federtopf als Guss-Teil auszuführen oder den Federboden zu verstärken. Beide Lösungen sind unvorteilhaft, da die Fertigung und Anbindung des Federtopfes als Guss-Teil konstruktiv aufwändig und mit hohem Mehraufwand verbunden ist bzw. da es durch die Verstärkung des Federbodens zu einer Erhöhung des Gewichts des Fahrwerkrahmens und der Fertigungszeit kommt.

Aus dem Stand der Technik ist beispielsweise die EP 2 783 939 A1 bekannt, welche ein Fahrwerk für einen Hochgeschwindigkeitszug zeigt. Auf Langträgern sind Primärfedertöpfe ausgebildet, in denen Primärfedern angeordnet sind. Ein elastischer Puffer ist von einem Primärfederpaar ummantelt und, in Bezug auf eine Grundfläche dieses Primärfederpaars, zentral angeordnet.

### Aufgabe der Erfindung

Es ist daher eine Aufgabe der Erfindung die Nachteile des Stands der Technik zu überwinden und einen Federtopf einer Primärfederung vorzuschlagen, welcher die Krafteinleitung in den Federboden verbessert, um die Biegebelastung zu reduzieren.

### Darstellung der Erfindung

Diese Aufgabe wird durch einen Federtopf mit den Merkmalen des Patentanspruchs 1 gelöst. Vorteilhafte Ausgestaltungen der Erfindung sind in den jeweiligen abhängigen Ansprüchen definiert.

Die eingangs gestellte Aufgabe wird dadurch gelöst, dass der Federteller derart gestaltet ist, dass eine auf die Kontaktfläche wirkende Kraft außerhalb jener Projektionsfläche in den Federboden eingeleitet wird, welche aus der Projektion zumindest der Kontaktfläche entlang der Längsachse auf den Federboden resultiert.

Durch die Ausbildung des Federtellers als Kontaktelement, also in anderen Worten durch die Kombination von Federteller und Kontaktelement, kann der Kraftfluss von der Kontaktfläche in den Federboden durch die Gestaltung des Federtellers beeinflusst werden. Da der Federteller derart gestaltet ist, dass die Einleitung der Kraft in den Federboden außerhalb der Projektionsfläche erfolgt, wird die Kraft aus dem zentralen Bereich des Federbodens in einen im Bezug zur Längsachse radial außen liegenden Bereich umgeleitet. So wird die Biegebelastung im Federboden erheblich reduziert. Der zentrale Abschnitt des Federtellers ist dabei im Federtopf in der Regel symmetrisch zur Längsachse ausgerichtet und umfasst jenen Bereich des Federtellers, der sich im Wesentlichen entlang der Längsachse erstreckt.

Die Definition, dass die Projektionsfläche aus der Projektion zumindest der Kontaktfläche entlang der Längsachse auf den Federboden resultiert, ist wie folgt zu verstehen: Das Kontaktelement weist eine Fläche (z.B. eine ebene Fläche) auf, an welcher die Notfedereinrichtung im Betriebszustand angreifen kann. Diese Fläche des Kontaktelements kann nun - radial bezüglich der Längsachse des Federtopfes - einen Durchmesser haben, der größer ist als der Durchmesser jenes Bauteils der Notfedereinrichtung, der das Kontaktelement kontaktiert. Die Kontaktfläche - wo also tatsächlich ein Kontakt mit der Notfedereinrichtung auftritt - wäre dann kleiner als die Fläche des Kontaktelements, die der Notfedereinrichtung zugewandt ist. Um eine Verteilung der durch die Notfedereinrichtung in den Federteller eingeleiteten Kraft nach außen zu bewirken, sollte die Kraft zumindest radial außerhalb der Projektion der tatsächlichen Kontaktfläche in den Federboden eingeleitet werden. Eine noch bessere Kraftverteilung im Federboden ergibt sich, wenn die Krafteinleitung auch radial außerhalb der Projektion des Kontaktelements erfolgt. In diesem Fall wäre also der Federteller derart gestaltet, dass eine auf die Kontaktfläche wirkende Kraft außerhalb jener Projektionsfläche in den Federboden eingeleitet wird, welche aus der Projektion des Kontaktelements entlang der Längsachse auf den Federboden resultiert.

In einer Ausführungsvariante eines erfindungsgemäßen Federtopfes ist vorgesehen, dass der Federteller eine Stützfläche aufweist, welche Stützfläche den Federboden außerhalb der Projektionsfläche (der Kontaktfläche oder des Kontaktelements) kontaktiert und die Kraft in den Federboden einleitet. Die Stützfläche dient dabei als definierter Bereich der Kraftübertragung zwischen Federteller und Federboden. Durch die geometrische Form der Stützfläche und deren Positionierung in Bezug auf die Längsachse kann der Kraftfluss vorteilhaft beeinflusst werden.

Um sicherzustellen, dass die Kraft außerhalb der Projektionsfläche in den Federboden eingeleitet wird, ist der Federteller in einer weiteren Ausführungsvariante der Erfindung im Bereich der Projektionsfläche in Richtung der Längsachse gesehen vom Federboden beabstandet. So wird in einfacher Art und Weise verhindert, dass die auf die Kontaktfläche wirkende Kraft ins Zentrum des Federbodens eingeleitet wird. Gleichermaßen ist dies auch dann möglich, wenn der zentrale Abschnitt des Federtellers vom Federboden beabstandet ist.

Eine besonders günstige geometrische Form der Stützfläche und damit eine gleichmäßige Krafteinleitung in den Federboden sind dann gegeben, wenn die Stützfläche in einer weiteren Ausführungsvariante eines erfindungsgemäßen Federtopfes kreisringförmig ausgebildet ist.

Versuche haben gezeigt, dass die durch die Krafteinleitung entstehende Flächenpressung zwischen Stützfläche und Federboden, bei einer kreisringförmigen Stützfläche einen Maximalwert, bei dem lokal die Fließgrenze überschritten wird, nicht übersteigt, wenn die Wanddicke der kreisringförmigen Stützfläche in einer bevorzugten Ausführungsvariante der Erfindung in einem Bereich zwischen 10% und 30%, besonders bevorzugt zwischen 15% und 25%, des Radius des Federtellers liegt. Der Radius des Federtellers erstreckt sich dabei von der Längsachse bis zum radial am weitesten außen liegenden Punkt des Federtellers. Unter Wandstärke ist der Abstand zwischen äußerem und innerem Durchmesser des Kreisrings in radialer Richtung bezogen auf die Längsachse zu verstehen.

Durch die Einleitung der Kraft in einem Bereich des Federbodens, der in Bezug zur Längsachse einen großen Abstand zur Längsachse selbst aufweist, wird die Biegebeanspruchung des Federbodens weiter reduziert. Daher ist in einer weiteren Ausführungsvariante eines erfindungsgemäßen Federtopfes vorgesehen, dass die Stützfläche bezogen auf die Längsachse radial beabstandet von der Projektionsfläche ist. Je größer der Abstand zwischen dem innersten Punkt der Stützfläche in radialer Richtung und der Längsachse ist, desto weiter wird die Biegebeanspruchung reduziert. Der theoretische Optimalfall, in dem die Krafteinleitung entlang einer Linie am radial äußersten Punkt des Federtellers und damit des Federbodens erfolgt, ist aufgrund der maximal zulässigen Flächenpressung und der Materialeigenschaften des Federtellers jedoch nicht realisierbar und kann daher nur durch konstruktive Maßnahmen angenähert werden.

Gemäß einer weiteren bevorzugten Ausführungsvariante der Erfindung weist der Federteller auf der dem Federboden gegenüberliegenden Seite eine Aufnahmefläche für zumindest ein Federelement der Primärfederung auf und überlappt die Aufnahmefläche radial zumindest abschnittsweise mit der Stützfläche (genauer mit einer Projektion der Stützfläche in Richtung der Längsachse). So wird eine definierte Anlagefläche für das Federelement geschaffen, wobei auch zwei oder mehrere Aufnahmeflächen vorgesehen sein können, wenn die Primärfederung zwei oder mehr Federelemente umfasst. Durch die Überlappung der Projektion der Stützfläche und der Aufnahmefläche kann die von den Federelementen auf den Federteller eingeleitete Kraft direkt in den Federboden eingeleitet werden.

Eine weitere Ausführungsvariante eines erfindungsgemäßen Federtopfes sieht vor, dass die Stützfläche in Bezug zur Längsachse zumindest den radial am weitesten außen liegenden Bereich des Federtellers umfasst. Dabei erstreckt sich der Federteller in radialer Richtung bevorzugt bis zu einem Mantel des Federtopfes selbst. Da sich die Krafteinleitung im radial am weitesten außen liegenden Bereich des Federbodens besonders günstig auf die Biegebeanspruchung des Federbodens auswirkt, ist die Erstreckung der Stützfläche bis in diesen Bereich besonders vorteilhaft.

Ein besonders günstiger Kraftfluss der durch die Federelemente in die Aufnahmefläche des Federtellers eingeleiteten Kraft ist in einer weiteren bevorzugten Ausführungsvariante gegeben, wenn die Stützfläche der Projektion der Aufnahmefläche in Richtung der Längsachse entspricht.

Um die Effekte des günstigen Kraftfluss der von den Federelementen ausgeübten Kraft, insbesondere wenn mehr als ein Federelement vorgesehen ist, und der Kraftumleitung der auf die Kontaktfläche wirkenden Kraft zu kombinieren, sieht eine besonders bevorzugte Ausführungsvariante eines erfindungsgemäßen Federtopfes vor, dass die Stützfläche der Projektion jenes Abschnittes der Aufnahmefläche entspricht, welche für die Aufnahme des auf die Längsachse bezogen radial am weitesten außen liegenden Federelementes bestimmt ist.

Wenn der Federteller mit Ausnahme der Stützfläche in Richtung der Längsachse gesehen vom Federboden beabstandet ist, so ist in einer weiteren Ausführungsvariante der Erfindung in einfacher Art und Weise sichergestellt, dass die Krafteinleitung in den Federboden ausschließlich über die Stützfläche erfolgt.

Die eingangs gestellte Aufgabe wird auch durch eine Primärfederung eines Schienenfahrzeuges zur federnden Anbindung eines Radsatzlagers des Schienenfahrzeuges an einen Fahrwerksrahmen des Schienenfahrzeuges, mit zumindest einem Federelement, einer Notfedereinrichtung, sowie einem erfindungsgemäßen Federtopf gelöst, wobei das zumindest eine Federelement in dem Federteller aufgenommen ist und die Notfedereinrichtung mit der Kontaktfläche kontaktierbar ist. Dabei ist der Federboden des Federtopfes entweder mit dem Fahrwerksrahmen verbunden oder wird durch den Fahrwerksrahmen ausgebildet, beispielsweise als Abschnitt des Obergurtes eines Längsträgers des Fahrwerkrahmens. Die Integration des Federtopfes in die Primärfederung stellt den Einbauzustand in einem betriebsbereiten Schienenfahrzeug dar. Dabei wird erfindungsgemäß die auf die Kontaktfläche wirkende Kraft in einen radial in Bezug zur Längsachse außen liegenden Bereich eingeleitet, wodurch sich die Biegebelastung reduziert.

Gemäß einer Ausführungsvariante entspricht die Stützfläche zumindest der Projektion eines Federelementes in Richtung der Längsachse. So wird wiederum sichergestellt, dass die Einleitung der Kraft in einem günstigen Bereich erfolgt und die von dem zumindest einen Federelement ausgeübte Kraft direkt in den Federboden einleitbar ist.

Eine weitere Ausführungsvariante einer Primärfederung mit erfindungsgemäßen Federtopf sieht vor, dass es sich bei dem zumindest einen Federelement um eine erste und eine weitere Schraubenfeder handelt, welche konzentrisch zur Längsachse angeordnet sind, und die Stützfläche der Projektion der bezogen auf die Längsachse radial außen liegenden ersten Schraubenfeder entspricht. So wird auch bei mehr als einem Federelement die Kombination der positiven Effekte aus direkter Einleitung der von den Federn ausgeübten Kraft und der Umleitung der auf die Kontaktfläche wirkenden Kraft erzielt.

### Kurzbeschreibung der Figuren

Zur weiteren Erläuterung der Erfindung wird im nachfolgenden Teil der Beschreibung auf die Figuren Bezug genommen, aus der weitere vorteilhafte Ausgestaltungen, Einzelheiten und Weiterbildungen der Erfindung zu entnehmen sind. Die Figuren sind als beispielhaft zu verstehen und sollen den Erfindungscharakter zwar darlegen, ihn aber keinesfalls einengen oder gar abschließend wiedergeben. Es zeigen:
- Fig. 1: eine Schnittdarstellung einer Primärfederung mit einem Federtopf gemäß dem Stand der Technik;
- Fig. 2: eine Prinzipdarstellung eines erfindungsgemäßen Federtopfes bei Krafteinwirkung über die Kontaktfläche;
- Fig. 3: eine Prinzipdarstellung eines erfindungsgemäßen Federtopfes bei Krafteinwirkung über die Federelemente;
- Fig. 4: eine Prinzipdarstellung eines erfindungsgemäßen Federtopfes bei kombinierter Krafteinwirkung;
- Fig. 5: eine Schnittdarstellung einer Primärfederung mit einer Ausführungsvariante eines erfindungsgemäßen Federtopfs.

### Ausführung der Erfindung

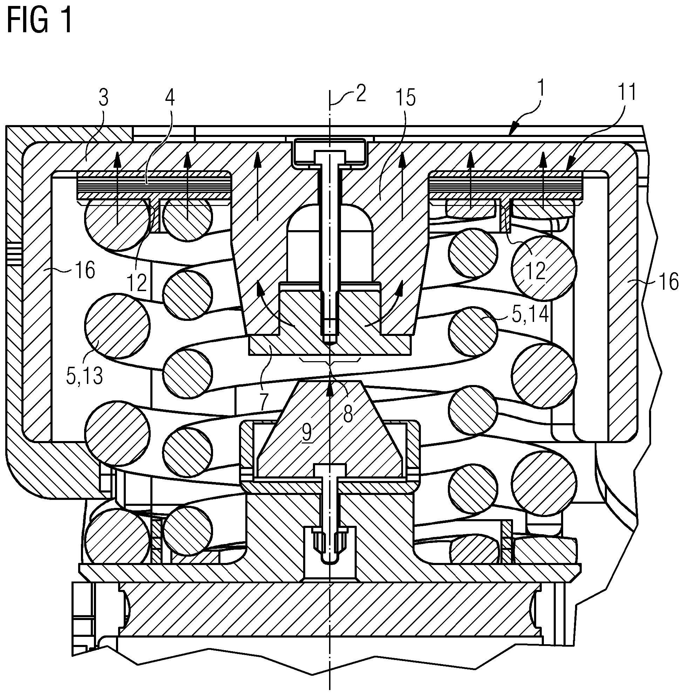

Figur 1 zeigt eine Ausführungsvariante eines Federtopfes 1 gemäß dem Stand der Technik in einer Primärfederung für ein Schienenfahrzeug. Der Federtopf 1 ist üblicher Weise an einem Fahrwerksrahmen eines Drehgestells des Schienenfahrzeuges angeordnet und weist eine Längsachse 2 auf. Gebildet wird der Federtopf 1 durch einen Federboden 3, welcher zur Einleitung auftretender Kräfte in den Fahrwerksrahmen dient, und einen Mantel 16. Der Federtopf 1 dient dabei zusätzlich zur Führung der Primärfederung, welche im vorliegenden Fall als zwei Federelemente 5, genauer eine erste Schraubenfeder 13 und eine weitere Schraubenfeder 14, ausgebildet ist.

Um die Schraubenfedern 13, 14 aufnehmen zu können, ist in dem Federtopf 1 ein plattenförmiger Federteller 4 angeordnet, welcher einerseits den Federboden 3 kontaktiert und andererseits eine Aufnahmefläche 12 für die Schraubenfedern 13,14 ausbildet.

Im Zentrum des Federtopfes 1 weist dieser eine Aufnahme 15 für ein Kontaktelement 7 auf, welches über eine Kontaktfläche 8 mit einer Notfedereinrichtung 9 kontaktierbar ist. Der Federteller 4 stützt sich gegen eine ebene Fläche des Federbodens 3 ab und kontaktiert diesen vollflächig mit Ausnahme des zentralen Bereichs, in dem die Aufnahme 15 angeordnet ist.

Ist der Federweg der Schraubenfedern 13,14 noch nicht erschöpft, werden die auftretenden Federkräfte direkt über den Federteller 4 in den Federboden 3 eingeleitet, wie durch die Pfeile am Federteller 4 angedeutet. Desto näher die Kraft radial in Bezug zur Längsachse 2 an der Längsachse 2 eingeleitet werden, desto höher ist die Biegebelastung im Federboden 3.

Sobald der Federweg der Schraubenfedern 13,14 jedoch erschöpft ist, kontaktiert die Kontaktfläche 8 des Kontaktelementes 7 die Notfedereinrichtung 9, sodass ein Großteil der Kräfte über das Kontaktelement 7 und die Aufnahme 15 direkt ins Zentrum des Federbodens 3 eingeleitet werden, wie durch die Pfeile in der Aufnahme 15 angedeutet. Dadurch wird einerseits sicher gestellt, dass die Schraubenfedern 13, 14 entlastet werden, um nicht plastisch verformt zu werden bzw. andererseits eine Notfederung bei Versagen zumindest einer der Schraubenfedern 13,14 gewährleistet. Jedoch wirkt durch die zentrale Krafteinleitung eine besonders hohe Biegebelastung auf den Federboden 3 ein, welche zu lokalen Verformungen führen könnte.

Im vorliegenden Ausführungsbeispiel wird eine Verformung aufgrund der hohen Biegebelastung durch die Gestaltung des Federtopfes 1 als Gussteil erreicht. Ein gegossener Federtopf 1 ist jedoch kostenintensiv in der Herstellung und muss während der Assemblierung an den Fahrwerksrahmen, der in der Regel als Schweißkonstruktion ausgeführt ist, angebunden werden. Dies bedingt einerseits eine aufwändige Konstruktion und andererseits höhere Fertigungszeiten sowie ein höheres Gewicht.

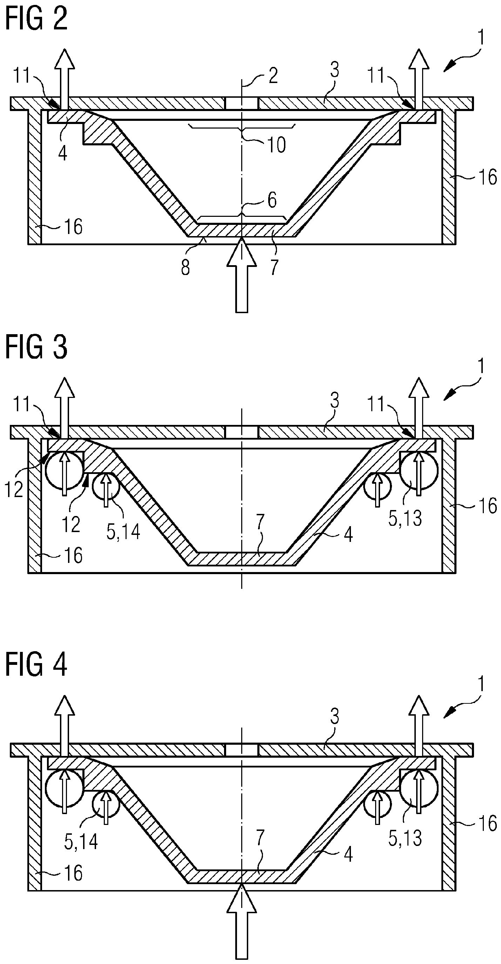

Die Figuren 2 bis 4 zeigen eine Prinzipdarstellung in Form eines Längsschnitts durch den gleichen erfindungsgemäßen Federtopf 1. Die Figuren unterscheiden sich jeweils durch den Ort der Krafteinleitung. Der Federtopf 1 weist eine Längsachse 2 auf und wird durch einen Federboden 3 und einen Mantel 16 gebildet, wobei sich der Mantel 16 im Wesentlichen parallel zur Längsachse 2 erstreckt. Der Querschnitt des Federtopfes 1, normal zur Längsachse 2 gesehen, ist dabei im Wesentlichen kreisförmig, jedoch sind auch andere geometrische Formen wie abgerundete Rechtecke oder Ellipsen denkbar, um nur einige zu nennen.

Der Federteller 4 bildet dabei das Kontaktelement 7 aus, hier in Form einer Kreisscheibe, und ist derart gestaltet, dass eine auf die Kontaktfläche 8 des Kontaktelementes 7 wirkende Kraft außerhalb einer Projektionsfläche 10 des Kontaktelementes 7 in den Federboden 3 eingeleitet wird. Die Projektionsfläche 10 entspricht dabei jener Fläche, welche aus der Projektion zumindest der Kontaktfläche 8 entlang der Längsachse 2 auf den Federtopf 1 bzw. auf den Federboden 3 des Federtopfs 1 resultiert. So wird sicher gestellt, dass die auf die Kontaktfläche 8 wirkende Kraft nicht im Zentrum des Federbodens 3, was der Projektionsfläche 10 entspricht, eingeleitet wird, sondern in einen radial außen liegenden Bereich umgeleitet wird. Dieser radial außen liegende Bereich ist damit, bezogen auf die Längsachse 2, radial von der Projektionsfläche 10 beabstandet.

Konstruktiv ist dies im vorliegenden Ausführungsbeispiel dadurch erreicht, dass der Federteller 4 in einem zentralen Abschnitt 6 das Kontaktelement 7 ausbildet und im Querschnitt durch die Längsachse 2, wie abgebildet, eine im Wesentlichen kegelstumpfförmige, hohle Form aufweist. So wird die auf die Kontaktfläche 8 wirkende Kraft, welche durch einen Pfeil symbolisch dargestellt ist, in den radial außen liegenden Bereich umgeleitet und dort über eine, den Federboden 3 kontaktierende, kreisringförmige Stützfläche 11 des Federtellers 4 in den Federboden 3 eingeleitet. Durch die hohle Form ist der Federteller 4 im Bereich der Projektionsfläche 10 bzw. im zentralen Abschnitt 6 des Federtellers 4 von dem Federboden 3 beabstandet. Dabei ist jener in Richtung der Längsachse 2 messbare Abstand gemeint.

Figur 3 zeigt Federtopf 1 und Federteller 4 analog zu Figur 2, jedoch sind zwei Federelemente 5 der Primärfeder angedeutet, welche jeweils an einer Aufnahmefläche 12 des Federtellers 4 angeordnet sind. Die Aufnahmefläche 12 ist dabei auf der der Stützfläche 11 gegenüberliegenden Seite des Federtellers 4 positioniert. In einer Richtung parallel zur Längsachse 2 gesehen, ist der Abstand zwischen Federboden 3 und der Aufnahmefläche 12 für das radial gesehen am weitesten außen liegende Federelement 5 geringer als der Abstand zur Aufnahmefläche 12 für das radial gesehen weiter innen liegende Federelement 5. Die auftretenden Kräfte stammen nur von den Federelementen 5, über die Kontaktfläche 8 wird keine Kraft eingeleitet.

Die Stützfläche 11 entspricht dabei der Projektion der Aufnahmefläche 12 für das radial am weitesten außen liegende Federelement 5, wobei auch denkbar ist, dass die Stützfläche 11 der Projektion der gesamten Aufnahmefläche 12, also für alle Federelemente 5, entspricht.

In Figur 4 ist die kombinierte Krafteinleitung sowohl über die Federelemente 5 als auch über die Kontaktfläche 8 dargestellt.

Die Aufnahmefläche 12, für beide Federelemente 5, ist so angeordnet, dass diese die Stützfläche 11 bzw. die Projektion der Stützfläche 11 in Richtung der Längsachse 2, also die Projektion der Stützfläche 11 auf die entgegengesetzte Seite des Federtellers 4, überlappt.

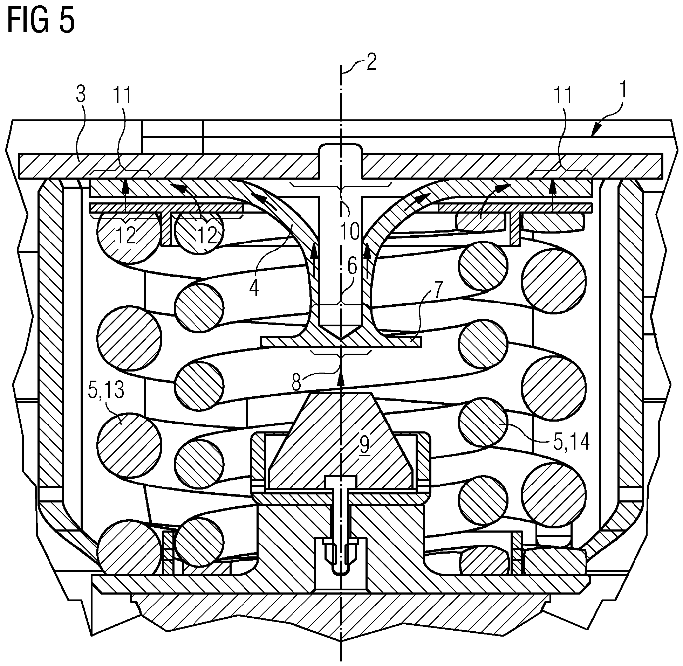

Figur 5 zeigt eine Primärfederung des Schienenfahrzeuges mit einer Ausführungsvariante des Federtopfes 1. Der Federboden 3 und der Mantel 16 sind dabei als Schweißkonstruktion ausgeführt, sodass der Federboden 3 als Teil des Fahrwerkrahmens, insbesondere als Obergurt eines Längsträgers des Fahrwerkrahmens, ausgebildet sein kann. Die in der Aufnahmefläche 12 des Federtellers 4 aufgenommenen Federelemente 5 der Primärfederung sind als eine erste Schraubenfeder 13, welche radial gesehen weiter außen liegt, und eine weitere Schraubenfeder 14, welche radial gesehen weiter innen liegt, ausgebildet.

Der im Federtopf 1 angeordnete Federteller 4 ist erfindungsgemäß gestaltet, sodass die auf die Kontaktfläche 8 einwirkende Kraft außerhalb der Projektionsfläche 10 in den Federboden 3 eingeleitet wird. Dazu entspricht die Form des Federtellers 4, mit Ausnahme des Kontaktelementes 7, im Wesentlichen einem Trichter, welcher von einem ebenen Rand im Bereich der kreisringförmigen Stützfläche 11, wo der Federteller 4 parallel zum Federboden 3 verläuft, bis zum zentralen Abschnitt 6 verläuft. Im Bereich des Kontaktelementes 7 nimmt der Durchmesser wieder zu, um die Kontaktfläche 8 zu vergrößern, sodass ein stößelförmiger Aufsatz entsteht. Verglichen mit der in den Figuren 2 bis 4 gezeigten Ausführungsvariante wird so zusätzlich Material eingespart und dadurch das Gewicht verringert.

Der Federteller 4 kontaktiert dabei den Federboden 3 ausschließlich im Bereich der Stützfläche 11 und ist ansonsten in Bezug zur Längsachse 2 vom Federboden 3 beabstandet. Die Stützfläche 11 umfasst dabei auch den radial am weitesten außen liegenden Bereich des Federtellers 4, welcher bis hin zum Mantel 16 verläuft. Es versteht sich jedoch von selbst, dass ein gewisser Spalt zwischen Federteller 4 und Mantel 16 eingehalten werden muss, um die Montage zu ermöglichen und ein Verkanten zu verhindern. Dabei entspricht die Stützfläche 11 auch der Projektion der Federelemente 5, genauer gesagt der Projektion der ersten Schraubenfeder 13.

### Bezugszeichenliste:

- 1: Federtopf
- 2: Längsachse des Federtopfes 1
- 3: Federboden
- 4: Federteller
- 5: Federelement
- 6: zentraler Abschnitt des Federtellers 4
- 7: Kontaktelement
- 8: Kontaktfläche des Kontaktelements 7
- 9: Notfedereinrichtung
- 10: Projektionsfläche
- 11: Stützfläche
- 12: Aufnahmefläche
- 13: erste Schraubenfeder
- 14: weitere Schraubenfeder
- 15: Aufnahme
- 16: Mantel des Federtopfes 1

## Patentansprüche

1. Federtopf (1) für eine Primärfederung eines Schienenfahrzeugs, wobei der Federtopf (1) eine Längsachse (2) und einen Federboden (3) zur Übertragung auftretender Kräfte an einen Fahrwerksrahmen des Schienenfahrzeuges aufweist, mit einem Federteller (4) zur Aufnahme von zumindest einem Federelement (5), welcher Federteller (4) gegen den Federboden (3) des Federtopfes (1) abgestützt ist,
wobei ein zentraler Abschnitt (6) des Federtellers (4) als ein Kontaktelement (7) mit einer Kontaktfläche (8) für eine Notfedereinrichtung (9) ausgebildet ist, **dadurch gekennzeichnet, dass** der Federteller (4) derart gestaltet ist, dass eine auf die Kontaktfläche (8) wirkende Kraft außerhalb jener Projektionsfläche (10) in den Federboden (3) eingeleitet wird, welche aus der Projektion zumindest der Kontaktfläche (8) entlang der Längsachse (2) auf den Federboden (3) resultiert, und dass der Federteller (4) eine Stützfläche (11) aufweist, welche Stützfläche (11) den Federboden (3) außerhalb der Projektionsfläche (10) kontaktiert und die Kraft in den Federboden (3) einleitet.

2. Federtopf (1) nach Anspruch 1, **dadurch gekennzeichnet, dass** der Federteller (4) im Bereich der Projektionsfläche (10) in Richtung der Längsachse (2) gesehen vom Federboden (3) beabstandet ist.

3. Federtopf (1) nach Anspruch 1 oder 2, **dadurch gekennzeichnet, dass** die Stützfläche (11) kreisringförmig ausgebildet ist.

4. Federtopf (1) nach Anspruch 3, **dadurch gekennzeichnet, dass** die Wanddicke der kreisringförmigen Stützfläche (11) in einem Bereich zwischen 10% und 30%, besonders bevorzugt zwischen 15% und 25%, des Radius des Federtellers (4) liegt.

5. Federtopf (1) nach einem der Ansprüche 1 bis 4, **dadurch gekennzeichnet, dass** die Stützfläche (11) bezogen auf die Längsachse (2) radial beabstandet von der Projektionsfläche (10) ist.

6. Federtopf (1) nach einem der Ansprüche 1 bis 5, **dadurch gekennzeichnet, dass** der Federteller (4) auf der dem Federboden (3) gegenüberliegenden Seite eine Aufnahmefläche (12) für zumindest ein Federelement (5) der Primärfederung aufweist und dass die Aufnahmefläche (12) radial zumindest abschnittsweise mit der Stützfläche (11) überlappt.

7. Federtopf (1) nach Anspruch 6, **dadurch gekennzeichnet, dass** die Stützfläche (11) in Bezug zur Längsachse (2) zumindest den radial am weitesten außen liegenden Bereich des Federtellers (4) umfasst.

8. Federtopf (1) nach Anspruch 6 oder 7, **dadurch gekennzeichnet, dass** die Stützfläche (11) der Projektion der Aufnahmefläche (12) in Richtung der Längsachse (2) entspricht.

9. Federtopf (1) nach Anspruch 6 oder 7, **dadurch gekennzeichnet, dass** die Stützfläche (11) der Projektion jenes Abschnittes der Aufnahmefläche (12) entspricht, welche für die Aufnahme des auf die Längsachse (2) bezogen radial am weitesten außen liegenden Federelementes (5) bestimmt ist.

10. Federtopf (1) nach einem der Ansprüche 1 bis 9, **dadurch gekennzeichnet, dass** der Federteller (4) mit Ausnahme der Stützfläche (11) in Richtung der Längsachse (2) gesehen vom Federboden (3) beabstandet ist.

11. Primärfederung eines Schienenfahrzeuges zur federnden Anbindung eines Radsatzlagers des Schienenfahrzeuges an einen Fahrwerksrahmen des Schienenfahrzeuges, mit zumindest einem Federelement (5), einer Notfedereinrichtung (9), sowie einem Federtopf (1) nach einem der Ansprüche 1 bis 10, wobei das zumindest eine Federelement (5) in dem Federteller (4) aufgenommen ist und die Notfedereinrichtung (9) mit der Kontaktfläche (8) kontaktierbar ist.

12. Primärfederung nach Anspruch 11, **dadurch gekennzeichnet, dass** die Stützfläche (11) zumindest der Projektion eines Federelementes (5) in Richtung der Längsachse (2) entspricht.

13. Primärfederung nach Anspruch 11 oder 12, **dadurch gekennzeichnet, dass** es sich bei dem zumindest einen Federelement (5) um eine erste (13) und eine weitere Schraubenfeder (14) handelt, welche konzentrisch zur Längsachse (2) angeordnet sind, und die Stützfläche (11) der Projektion der bezogen auf die Längsachse (2) radial außen liegenden ersten Schraubenfeder (13) entspricht.

## Claims

1. Spring cup (1) for a primary suspension of a rail vehicle, wherein the spring cup (1) has a longitudinal axis (2) and a spring base (3) for transmitting occurring forces onto a chassis frame of the rail vehicle, comprising a spring seat (4) for receiving at least one spring element (5), said spring seat (4) being supported against the spring base (3) of the spring cup (1), wherein a central section (6) of the spring seat (4) is designed as a contact element (7) having a contact surface (8) for an emergency spring device (9), **characterised in that** the spring seat (4) is configured such that a force acting on the contact surface (8) is transferred into the spring base (3) outside of that projection surface (10) which results from the projection of at least the contact surface (8) along the longitudinal axis (2) onto the spring base (3), and that the spring seat (4) has a supporting surface (11), which supporting surface (11) is in contact with the spring base (3) outside of the projection surface (10) and transfers the force into the spring base (3).

2. Spring cup (1) according to claim 1, **characterised in that** the spring seat (4) in the region of the projection surface (10) is separated from the spring base (3) in the direction of the longitudinal axis (2).

3. Spring cup (1) according to claim 1 or 2, **characterised in that** the supporting surface (11) is annular.

4. Spring cup (1) according to claim 3, **characterised in that** the wall thickness of the annular supporting surface (11) lies in a range between 10% and 30%, preferably between 15% and 25%, of the radius of the spring seat (4).

5. Spring cup (1) according to one of claims 1 to 4, **characterised in that** the supporting surface (11) is radially separated from the projection surface (10) relative to the longitudinal axis (2).

6. Spring cup (1) according to one of claims 1 to 5, **characterised in that** on that side which is opposite to the spring base (3), the spring seat (4) has a receiving surface (12) for at least one spring element (5) of the primary suspension, and that the receiving surface (12) radially and at least sectionally overlaps the supporting surface (11).

7. Spring cup (1) according to claim 6, **characterised in that** the supporting surface (11) includes at least the radially outermost region of the spring seat (4) relative to the longitudinal axis (2).

8. Spring cup (1) according to claim 6 or 7, **characterised in that** the supporting surface (11) corresponds to the projection of the receiving surface (12) in the direction of the longitudinal axis (2).

9. Spring cup (1) according to claim 6 or 7, **characterised in that** the supporting surface (11) corresponds to the projection of that section of the receiving surface (12) which is intended to receive the spring element (5) that is radially outermost relative to the longitudinal axis (2).

10. Spring cup (1) according to one of claims 1 to 9, **characterised in that** the spring seat (4) with the exception of the supporting surface (11) is separated from the spring base (3) in the direction of the longitudinal axis (2).

11. Primary suspension of a rail vehicle for the sprung attachment of a wheelset bearing of the rail vehicle to a chassis frame of the rail vehicle, comprising at least one spring element (5), an emergency spring device (9), and a spring cup (1) according to one of claims 1 to 10, wherein the at least one spring element (5) is accommodated in the spring seat (4) and the emergency spring device (9) can come into contact with the contact surface (8).

12. Primary suspension according to claim 11, **characterised in that** the supporting surface (11) corresponds at least to the projection of a spring element (5) in the direction of the longitudinal axis (2).

13. Primary suspension according to claim 11 or 12, **characterised in that** the at least one spring element (5) takes the form of a first coil spring (13) and a further coil spring (14) which are arranged concentrically relative to the longitudinal axis (2), and the supporting surface (11) corresponds to the projection of the first coil spring (13), this being radially outermost relative to the longitudinal axis (2).

## Revendications

1. Pot de ressort (1) destiné à une suspension primaire d'un véhicule ferroviaire, le pot de ressort (1) comportant un axe longitudinal (2) et une base de ressort (3) pour transmettre des forces générées sur un cadre de châssis du véhicule ferroviaire, comportant une coupelle de ressort (4) pour accueillir au moins un élément de ressort (5), ladite coupelle de ressort (4) s'appuyant contre la base de ressort (3) du pot de ressort (1), une partie centrale (6) de la coupelle de ressort (4) étant réalisée sous forme d'un élément de contact (7) comportant une surface de contact (8) pour un dispositif de ressort de secours (9), **caractérisé en ce que** la coupelle de ressort (4) est conçue de manière qu'une force exercée sur la surface de contact (8) est introduite dans la base de ressort (3) en dehors de ladite surface de projection (10), force qui résulte de la projection d'au moins la surface de contact (8) le long de l'axe longitudinal (2) sur la base de ressort (3), et **en ce que** la coupelle de ressort (4) comporte une surface d'appui (11), ladite surface d'appui (11) entrant en contact avec la base de ressort (3) en dehors de la surface de projection (10), introduisant ainsi la force dans la base de ressort (3).

2. Pot de ressort (1) selon la revendication 1, **caractérisé en ce que** à l'endroit de la surface de projection (10) vu en direction de l'axe longitudinal (2), la coupelle de ressort (4) est espacée de la base du ressort (3).

3. Pot de ressort (1) selon la revendication 1 ou 2, **caractérisé en ce que** la surface d'appui (11) est conçue sous forme annulaire.

4. Pot de ressort (1) selon la revendication 3, **caractérisé en ce que** l'épaisseur de la paroi de la surface d'appui annulaire (11) est comprise entre 10% et 30%, de manière particulièrement préférée entre 15% et 25% du rayon de la coupelle de ressort (4).

5. Pot de ressort (1) selon l'une des revendications 1 à 4, **caractérisé en ce que** la surface d'appui (11) est radialement espacée de la surface de projection (10) par rapport à l'axe longitudinal (2).

6. Pot de ressort (1) selon l'une des revendications 1 à 5, **caractérisé en ce que** la coupelle de ressort (4) présente, sur le côté opposé à la base de ressort (3), une surface de réception (12) pour au moins un élément de ressort (5) de la suspension primaire, et **en ce que** la surface de réception (12) chevauche radialement au moins par portions la surface d'appui (11).

7. Pot de ressort (1) selon la revendication 6, **caractérisé en ce que** la surface d'appui (11) comporte, par rapport à l'axe longitudinal (2), au moins la zone radialement la plus externe de la coupelle de ressort (4).

8. Pot de ressort (1) selon la revendication 6 ou 7, **caractérisé en ce que** la surface d'appui (11) correspond à la projection de la surface de réception (12) en direction de l'axe longitudinal (2).

9. Pot de ressort (1) selon la revendication 6 ou 7, **caractérisé en ce que** la surface d'appui (11) correspond à la projection de la portion de la surface de réception (12) destinée à recevoir l'élément de ressort (5) situé radialement le plus externe par rapport à l'axe longitudinal (2).

10. Pot de ressort (1) selon l'une des revendications 1 à 9, **caractérisé en ce que** la coupelle de ressort (4) est espacée de la base du ressort (3), vu en direction de l'axe longitudinal (2), à l'exception de la surface d'appui (11).

11. Suspension primaire d'un véhicule ferroviaire pour le raccordement élastique d'un palier d'essieu du véhicule ferroviaire à un cadre de châssis du véhicule ferroviaire, comportant au moins un élément de ressort (5), un dispositif de ressort de secours (9) et un pot de ressort (1) selon l'une des revendications 1 à 10, l'au moins un élément de ressort (5) étant intégré à la coupelle de ressort (4) et le dispositif de ressort de secours (9) pouvant être mis en contact avec la surface de contact (8).

12. Suspension primaire selon la revendication 11, **caractérisée en ce que** la surface d'appui (11) correspond au moins à la projection d'un élément de ressort (5) en direction de l'axe longitudinal (2).

13. Suspension primaire selon la revendication 11 ou 12, **caractérisée en ce que**, quant à l'au moins un élément de ressort (5), il s'agit d'un premier ressort hélicoïdal (13) et d'un ressort hélicoïdal (14) supplémentaire qui sont disposés concentriquement par rapport à l'axe longitudinal (2), et la surface d'appui (11) correspond à la projection du premier ressort hélicoïdal (13) située radialement à l'extérieur par rapport à l'axe longitudinal (2).
